# DEMANDE DE BREVET EUROPEEN

(11) **EP 1 710 640 A1**
(43) Date de publication de la demande: **11.10.2006**
(21) Numéro de dépôt: 06006228.8
(22) Date de dépôt: 27.03.2006
(51) Int. Cl.: G05B 19/042, G05B 19/425

(54) **Appareil de configuration d'un volet roulant motorise et procedes de fabrication et de fonctionnement d'un tel appareil**

(30) Priorité: 07.04.2005 FR 0503468
(71) Demandeur: Somfy SAS, 74300 Cluses (FR)
(72) Inventeur: Blockhaus, Harry, 72411 Bodelshausen (DE); Tscherny, Georg, 71155 Altdorf (DE)
(74) Mandataire: Bugnion Genève

(57) **Abrégé**

L'appareil (1) de configuration d'un actionneur (2) de volet roulant motorisé (20), est destiné à être connecté et à interagir avec l'actionneur et le volet (3) exclusivement pendant des phases de configuration de l'actionneur et comprend des moyens (19, 6) pour enregistrer des données dans l'actionneur. Il est caractérisé en ce qu'il comprend des moyens (19, 6) pour commander l'actionneur et des moyens de détection (8, 9, 24) pour détecter au moins une position particulière de l'élément mobile. L'invention se rapporte également à un procédé de fonctionnement et de fabrication d'un tel appareil.

## Description

L'invention se rapporte à un appareil de configuration d'un actionneur selon le préambule de la revendication 1. Elle concerne également un procédé de fonctionnement et un procédé de fabrication d'un tel appareil.

Les procédures de configuration des dispositifs domotiques munis d'éléments mobiles comprennent par exemple l'enregistrement de valeurs en mémoire pour définir des positions de fin de course dans lesquelles l'alimentation de l'actionneur électrique est coupée pour immobiliser l'élément mobile. De tels actionneurs et de tels procédés pour l'enregistrement de positions de fin de course sont par exemple connus de la demande EP 0 426 577 et de la demande EP 0 770 757. La plupart des procédés de configuration reposent sur des séquences particulières d'ordres (par exemple des séquences d'appuis sur des boutons poussoirs) ayant des durées variables. Cependant, il est parfois difficile de reproduire manuellement de telles séquences. C'est pourquoi des appareils de configuration ont été développés. Ils permettent de simuler de manière précise des séquences d'appuis sur des touches de commande.

Les opérations de configuration notamment de configuration des positions de fin de course peuvent intervenir à différents moments du cycle de vie de l'actionneur. Par exemple, il peut être nécessaire de configurer l'actionneur lors de sa fabrication, lors de son installation ou après son installation (par exemple lors d'opérations de maintenance). En ce qui concerne les actionneurs qui sont directement assemblés en usine aux éléments qu'ils sont destinés à entraîner, il est intéressant de configurer ceux-ci en usine. La configuration en usine se fait par une série d'actions d'un opérateur sur le dispositif. Ces actions prennent du temps et par conséquent coûtent cher. De plus, ces opérations de configuration sont imprécises. En effet, d'un dispositif à l'autre, il existe des dispersions de positions des fins de course enregistrées. Il est donc nécessaire de simplifier ces opérations et de les rendre plus précises.

On connaît de la demande WO 98/37493 un procédé de configuration d'actionneurs utilisant une interface et un outil de programmation. Via cette interface, des données de fonctionnement sont transférées de l'outil à l'actionneur. Cependant, du fait de dispersions dans les cotes de fabrication des éléments mécaniques composant le dispositif, il est nécessaire, en ce qui concerne les positions de fin de course, d'enregistrer des valeurs qui peuvent être différentes pour chaque dispositif afin de produire le même effet sur chacun des dispositifs. Ce procédé n'offre pas de solution à ce problème.

Le but de l'invention est de fournir un appareil de configuration permettant de remédier aux inconvénients cités et d'améliorer les appareils de configuration connus de l'art antérieur. En particulier, l'invention propose un appareil de configuration permettant de configurer rapidement et précisément un actionneur destiné à équiper un dispositif motorisé de fermeture, d'occultation, de protection solaire ou d'écran. Le but de l'invention est également de fournir un procédé de fonctionnement d'un appareil de configuration.

L'appareil de configuration selon l'invention est caractérisé par la partie caractérisante de la revendication 1.

Différents modes de réalisation de l'appareil selon l'invention sont définis par les revendications dépendantes 2 à 7.

Le procédé de fonctionnement d'un appareil de configuration selon l'invention est défini par la revendication 8.

Des variantes de ce procédé sont définies par les revendications 9 et 10.

Le procédé de fabrication d'un appareil de configuration selon l'invention est défini par la revendication 11.

Une variante de ce procédé est définie par la revendication 12.

Le dessin annexé représente, à titre d'exemple, un mode de réalisation d'un appareil de configuration selon l'invention et un mode d'exécution d'un procédé de fonctionnement d'un tel appareil.

La figure 1 est une vue schématique d'un mode de réalisation d'un appareil selon l'invention connecté à un dispositif domotique à configurer.

La figure 2 est une vue schématique de détail d'une unité de configuration d'un mode de réalisation d'un appareil selon l'invention.

La figure 3 est un ordinogramme d'un mode d'exécution du procédé de fonctionnement d'un appareil selon l'invention.

Les figures 4 à 7 sont des ordinogrammes détaillés de différentes procédures automatiques de configuration.

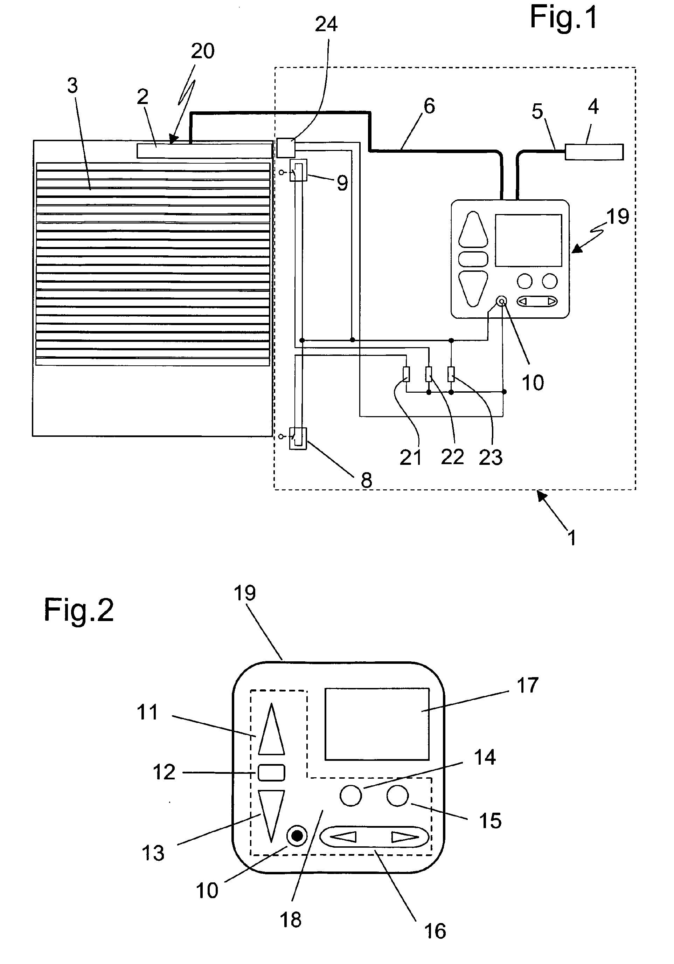

L'appareil de configuration 1 représenté à la figure 1 est connecté à un dispositif motorisé 20 de fermeture, d'occultation, de protection solaire ou d'écran. Ce dernier comprend un élément mobile 3 entraîné par un actionneur électrique 2. Il peut par exemple s'agir d'un volet roulant.

L'appareil 1 est utilisé pour configurer le dispositif 20, c'est-à-dire régler notamment des positions de fin de course et le sens de déplacement de l'élément mobile en réponse à un ordre de commande de mouvement donné.

L'appareil 1 comprend principalement une unité de configuration 19 reliée à des moyens 4, 5 d'alimentation, à des moyens 8, 9, 10 de détection de position de l'élément mobile 3 et à des moyens de connexion à l'actionneur 6 du dispositif.

Les moyens d'alimentation comprennent une source 4 d'énergie électrique, telle que le secteur, un dispositif d'alimentation à courant continu, un panneau solaire ou une batterie, et un câble 5 reliant la source d'énergie électrique à l'unité de configuration.

Les moyens de détection de position de l'élément mobile 3 comprennent deux capteurs 8, 9 permettant de détecter des positions particulières de l'élément mobile. Les moyens de détection comprennent également trois résistances 21, 22, 23 disposées en parallèle. Deux des résistances 21, 22 sont branchées en série avec les capteurs 8 et 9 constituant des interrupteurs. Ainsi, selon que la position occupée par l'élément mobile est la position haute, la position basse ou toute autre position intermédiaire, la résistance équivalente aux bornes du montage prend trois valeurs différentes. La valeur de la résistance constitue donc un signal de position. L'unité de configuration présente des moyens pour déterminer cette résistance et pour en déduire la position de l'élément mobile.

Dans un mode de réalisation, les capteurs 8 et 9 sont des contacts actionnés mécaniquement par des palpeurs. Dans un autre mode de réalisation, il s'agit d'interrupteurs commandés par la coupure d'un faisceau optique, par exemple émis par une diode laser. Un interrupteur à lame souple commandé par un petit aimant placé sur la lame finale du volet peut également convenir, de même que tout dispositif de détection de proximité par procédé optique, par couplage électromagnétique ou par ultrasons. Dans d'autres modes de réalisation, la sortie du capteur n'est pas constituée par un simple interrupteur commandé mais par une source de courant : par exemple, le premier capteur absorbe un courant de 5 mA quand il n'est pas activé et un courant de 20 mA quand il est activé, et le deuxième capteur absorbe un courant de 10 mA quand il n'est pas activé et absorbe un courant de 40 mA quand il est activé. Les différents capteurs sont alors mis en parallèle : la mesure du courant débité par l'unité de configuration 19 sur sa fiche bipolaire 10 suffit à connaître l'état des deux capteurs et à vérifier que les capteurs sont effectivement raccordés à la fiche bipolaire 10.

Préférentiellement, un troisième capteur 24 est relié à l'unité de configuration et permet d'identifier le sens de déplacement du volet ou, de manière équivalente, le sens de rotation du tube d'enroulement. Ce capteur comprend une couronne à secteurs magnétiques alternés entraînée par un élément de la chaîne cinématique permettant d'entraîner l'élément mobile et deux sondes à effet Hall décalées d'un quart du pas de la couronne. Un premier contact ou un deuxième contact se ferme selon le sens de rotation détecté par les sondes. De tels dispositifs sont largement connus. Tout autre dispositif de détection de sens convient. Préférentiellement, le capteur de sens de mouvement n'est pas lui-même muni d'une logique de traitement et de contacts : le signal des sondes sert à provoquer une faible modulation (directe ou par fréquence porteuse) du courant circulant dans le circuit alimentant les moyens de détection raccordés à la fiche bipolaire 10, et les moyens de mesure contenus dans l'unité de configuration 19 permettent l'identification du sens du mouvement.

Les moyens de connexion à l'actionneur comprennent un câble 6 muni de préférence d'une fiche permettant de relier celui-ci aisément à l'actionneur. Il permet d'une part d'alimenter l'actionneur et d'autre part de transmettre des ordres et des données de l'unité de configuration à l'actionneur et de l'actionneur à l'unité de configuration.

Les ordres, les données et tout autre signal peuvent également être transmis par des moyens sans fils entre l'actionneur et l'unité de configuration et entre les moyens de détection de position et l'unité de configuration par exemple par des ondes radioélectriques ou infrarouges.

L'unité de configuration 19 comprend un microcontrôleur, une mémoire et une fiche 10 pour recevoir le signal issu des moyens de détection. Elle comprend en outre une interface opérateur comprenant un clavier 18 et un moyen d'information de l'opérateur 17. Le moyen peut être un écran 17, par exemple du type à diodes électroluminescentes organiques, à matrice active ou à cristaux liquide. Ce moyen peut également être constitué par des diodes ou par un moyen acoustique. Le moyen d'information permet de guider l'opérateur à travers les différents modes de fonctionnement de l'appareil et les différentes procédures automatiques qui peuvent être exécutées.

L'interface opérateur comprend en outre un clavier 18 comportant des touches 11, 12, 13, 14, 15 et 16.

Par exemple, des déplacements de l'élément mobile peuvent être commandés par des appuis sur les touches 11, 12 ou 13, la touche 11 commandant la montée de l'élément mobile, la touche 12 son arrêt et la touche 13 sa descente. Ainsi, des tests de fonctionnement du dispositif peuvent être opérés manuellement par l'opérateur.

Préférentiellement, pour réduire les coûts de fabrication, l'unité de configuration 19 utilise tous les composants matériels d'une unité de commande prévue pour piloter un ou plusieurs appareils dans une installation terminée, par exemple une unité de commande de type programmateur horaire. Dans ce cas, la fiche bipolaire 10 correspond au moyen de connexion normalement prévu pour raccorder un capteur d'ensoleillement.

Différents modes de fonctionnement de l'unité de programmation, tels que par exemple un mode de configuration et un mode de remise à zéro peuvent être sélectionnés par appui sur une touche de mode 14 « MODE ». A l'intérieur de ces modes différentes étapes peuvent être sélectionnées en utilisant des touches de navigation 16 et ces étapes peuvent être exécutées par appui sur la touche de validation 15 « OK ». Le mode et l'étape dans laquelle se trouve l'interface peuvent être visualisés grâce aux moyens d'information de l'opérateur 17.

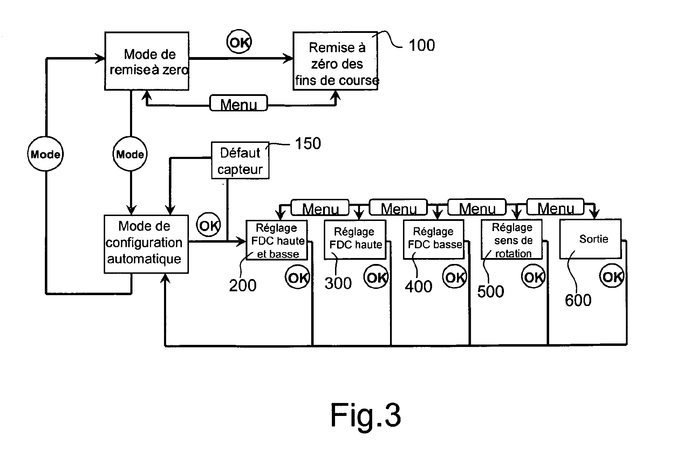

Un mode d'exécution de l'appareil de configuration selon l'invention est décrit en référence à l'ordinogramme de la figure 3. Par appui sur la touche de mode 14, il est possible de sélectionner soit le mode de remise à zéro, soit le mode de configuration automatique. Le mode de remise à zéro permet, dans une étape 100, l'effacement de tous les réglages de l'actionneur qui ont été effectués. Le mode de configuration permet quant à lui l'enregistrement de réglages dans des procédures automatiques de réglage des positions de fin de course haute et basse 200, de réglage de la position de fin de course haute 300, de réglage de la position de fin de course basse 400 et de réglage du sens de rotation de l'actionneur 500. Avant de mettre en oeuvre l'une de ces procédures automatiques, l'appareil teste automatiquement, dans une étape 150, l'état des capteurs de positions. Si ceux-ci ne sont pas opérationnels, les procédures automatiques ne peuvent pas être exécutées. Ceci permet d'éviter d'effectuer des configurations incorrectes de l'actionneur.

Par appui sur les touches de navigation 16, il est possible de .passer d'une procédure automatique à l'autre et de sortir du mode de configuration à l'étape 600. De préférence, suite à l'entrée dans le mode de configuration, la procédure automatique de réglage des positions de fin de course haute et basse est accessible par défaut, c'est-à-dire sans qu'il soit nécessaire d'agir sur l'une des touches de navigation. De préférence, dès la mise sous tension de l'appareil de configuration, celui-ci est placé par défaut en mode de configuration. Ainsi, après la mise sous tension de l'appareil, un seul appui sur la touche de validation 15 permet de lancer une procédure automatique réglant les deux positions de fin de course de l'actionneur.

Le lancement d'une autre procédure automatique est effectué par une étape de sélection de cette procédure à l'aide des touches 16 puis par validation à l'aide de la touche 15. Suite à l'appui sur la touche de validation, plus aucune action de l'opérateur n'est nécessaire.

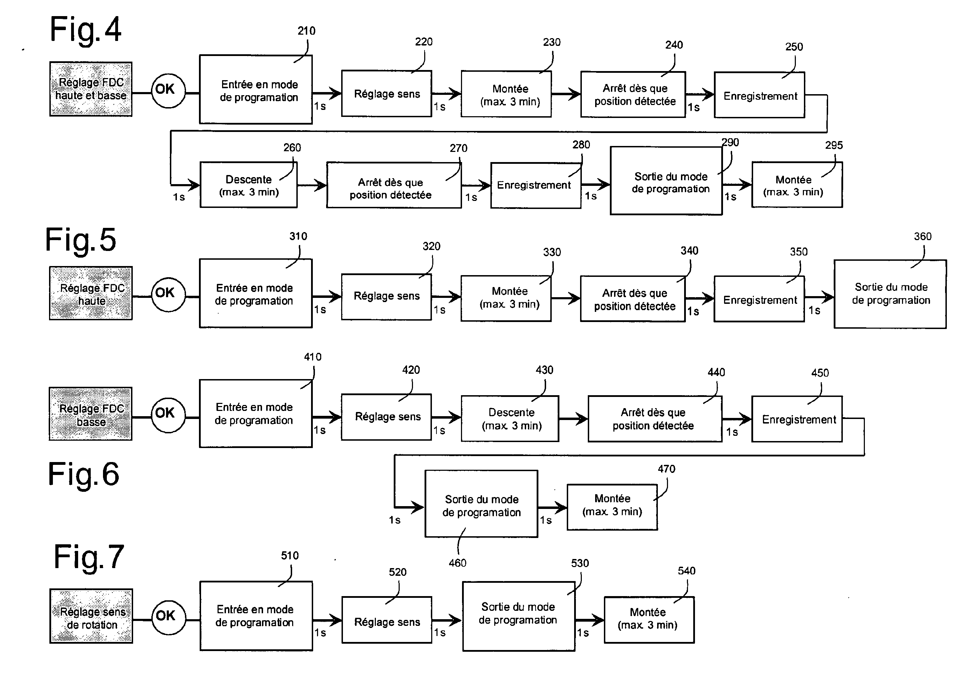

Un mode d'exécution de la procédure automatique 200 de réglage des positions de fin de course haute et basse est décrit en référence à l'ordinogramme de la figure 4. Dans une première étape 210, faisant suite à l'appui sur la touche de validation 15, l'unité de configuration envoie à l'actionneur un ordre de basculement dans un mode de programmation. Après une temporisation d'une seconde, dans une étape 220, le sens de rotation de l'actionneur est réglé, c'est-à-dire mis en conformité avec les ordres de commande de mouvement reçus. Cette étape peut être effectuée selon différents moyens connus de l'homme du métier. En particulier, le signal issu des moyens de détection peut être utilisé. Après une nouvelle temporisation d'une seconde, dans une étape 230, l'unité de configuration envoie à l'actionneur un ordre de commande de mouvement de l'élément mobile vers le haut (la durée de ce mouvement étant par exemple limitée à 3 minutes). Dans une étape 240, dès que l'élément mobile atteint une position haute matérialisée par la position du capteur supérieur, l'unité de configuration le détecte et envoie immédiatement à l'actionneur un ordre d'arrêt. Après une temporisation d'une seconde, dans une étape 250, l'unité de configuration envoie à l'actionneur un ordre d'enregistrement de la position courante de l'élément mobile et l'actionneur stocke une valeur correspondant à cette position dans une de ses mémoires, cette valeur définissant la position de fin de course haute. Après une nouvelle temporisation d'une seconde, dans une étape 260, l'unité de configuration envoie à l'actionneur un ordre de commande de mouvement de l'élément mobile vers le bas (la durée de ce mouvement étant par exemple limitée à 3 minutes). Dans une étape 270, dès que l'élément mobile atteint une position basse matérialisée par la position du capteur inférieur, l'unité de configuration le détecte et envoie immédiatement à l'actionneur un ordre d'arrêt. Après une temporisation d'une seconde, dans une étape 280, l'unité de configuration envoie à l'actionneur un ordre d'enregistrement de la position courante de l'élément mobile et l'actionneur stocke une valeur correspondant à cette position dans une de ses mémoires, cette valeur définissant la position de fin de course basse. Après une temporisation d'une seconde, dans une étape 290, l'unité de configuration envoie à l'actionneur un ordre de sortie du mode de programmation. Après une temporisation d'une seconde, dans une étape 295, l'unité de configuration envoie à l'actionneur un ordre de commande de mouvement de l'élément mobile vers le haut (la durée de ce mouvement étant par exemple limitée à 3 minutes). A la suite de cette procédure, les deux positions de fin de course de l'élément mobile sont réglées et l'élément mobile est placé en position de fin de course haute.

Un mode d'exécution de la procédure automatique 300 de réglage de la position de fin de course haute est décrit en référence à l'ordinogramme de la figure 5. Dans une première étape 310, faisant suite à l'appui sur la touche de validation 15, l'unité de configuration envoie à l'actionneur un ordre de basculement dans un mode de programmation. Après une temporisation d'une seconde, dans une étape 320, le sens de rotation de l'actionneur est réglé. Après une nouvelle temporisation d'une seconde, dans une étape 330, l'unité de configuration envoie à l'actionneur un ordre de commande de mouvement de l'élément mobile vers le haut (la durée de ce mouvement étant par exemple limitée à 3 minutes). Dans une étape 340, dès que l'élément mobile atteint une position haute matérialisée par la position du capteur supérieur, l'unité de configuration le détecte et envoie immédiatement à l'actionneur un ordre d'arrêt. Après une temporisation d'une seconde, dans une étape 350, l'unité de configuration envoie à l'actionneur un ordre d'enregistrement de la position courante de l'élément mobile et l'actionneur stocke une valeur correspondant à cette position dans une de ses mémoires, cette valeur définissant la position de fin de course haute. Après une temporisation d'une seconde, dans une étape 360, l'unité de configuration envoie à l'actionneur un ordre de sortie du mode de programmation. A la suite de cette procédure, la position de fin de course haute de l'élément mobile est réglée et l'élément mobile est placé en position de fin de course haute.

Un mode d'exécution de la procédure automatique 400 de réglage de la position de fin de course basse est décrit en référence à l'ordinogramme de la figure 6. Dans une première étape 410, faisant suite à l'appui sur la touche de validation 15, l'unité de configuration envoie à l'actionneur un ordre de basculement dans un mode de programmation. Après une temporisation d'une seconde, dans une étape 420, le sens de rotation de l'actionneur est réglé. Après une nouvelle temporisation d'une seconde, dans une étape 430, l'unité de configuration envoie à l'actionneur un ordre de commande de mouvement de l'élément mobile vers le bas (la durée de ce mouvement étant par exemple limitée à 3 minutes). Dans une étape 440, dès que l'élément mobile atteint une position basse matérialisée par la position du capteur inférieur, l'unité de configuration le détecte et envoie immédiatement à l'actionneur un ordre d'arrêt. Après une temporisation d'une seconde, dans une étape 450, l'unité de configuration envoie à l'actionneur un ordre d'enregistrement de la position courante de l'élément mobile et l'actionneur stocke une valeur correspondant à cette position dans une de ses mémoires, cette valeur définissant la position de fin de course basse. Après une temporisation d'une seconde, dans une étape 460, l'unité de configuration envoie à l'actionneur un ordre de sortie du mode de programmation. Après une temporisation d'une seconde, dans une étape 470, l'unité de configuration envoie à l'actionneur un ordre de commande de mouvement de l'élément mobile vers le haut (la durée de ce mouvement étant par exemple limitée à 3 minutes). A la suite de cette procédure, la position de fin de course basse de l'élément mobile est réglée et l'élément mobile est placé en position de fin de course haute (en supposant que celle-ci avait préalablement été réglée).

Un mode d'exécution de la procédure automatique 500 de réglage du sens de rotation de l'actionneur est décrit en référence à l'ordinogramme de la figure 7. Dans une première étape 510, faisant suite à l'appui sur la touche de validation 15, l'unité de configuration envoie à l'actionneur un ordre de basculement dans un mode de programmation. Après une temporisation d'une seconde, dans une étape 520, le sens de rotation de l'actionneur est réglé, c'est-à-dire mis en conformité avec les ordres de commande de mouvement reçus. Après une temporisation d'une seconde, dans une étape 530, l'unité de configuration envoie à l'actionneur un ordre de sortie du mode de programmation. Après une temporisation d'une seconde, dans une étape 540, l'unité de configuration envoie à l'actionneur un ordre de commande de mouvement de l'élément mobile vers le haut (la durée de ce mouvement étant par exemple limitée à 3 minutes). A la suite de cette procédure, le sens de rotation de l'actionneur est réglé et l'élément mobile est placé en position de fin de course haute (en supposant que celle-ci avait préalablement été réglée).

D'autres procédures automatiques non décrites mais semblables à celles décrites peuvent être mises en oeuvre par l'appareil de configuration pour d'autres paramètres de réglage du dispositif en particulier des positions intermédiaires de l'élément mobile. Dans ce cas d'autres moyens de détection de position peuvent être nécessaires.

Lorsque l'appareil de configuration selon l'invention est utilisé pour effectuer des réglages d'un actionneur dans une unité de production d'actionneurs, les actionneurs peuvent être installés sur un poste de réglage par des moyens connus permettant une connexion mécanique aisée et rapide à un élément mobile et une connexion électrique aisée et rapide à l'appareil de configuration. En particulier, l'élément mobile auquel l'actionneur est lié peut être différent de celui qu'il sera destiné à entraîner une fois installé. En particulier, son encombrement en largeur peut être diminué. Il va de soi que pour que tous les actionneurs puissent être réglés en utilisant un même élément mobile, il est nécessaire que les éléments mobiles soient fabriqués avec un niveau de précision suffisant de sorte qu'il n'existe que peu de dispersions de longueur entre l'élément utilisé pour le réglage et l'élément qui sera finalement assemblé à l'actionneur.

L'appareil de configuration pourrait également être utilisé pour effectuer des réglages d'un actionneur une fois que celui-ci est installé dans un bâtiment.

L'appareil de configuration n'est pas destiné à être utilisé pour commander les mouvements d'un élément mobile de fermeture, d'occultation, de protection solaire ou d'écran lorsque celui-ci a été installé dans un bâtiment. Il n'est destiné à être connecté à des actionneurs et interagir avec eux que lorsque ceux-ci doivent être configurés par exemple dans une unité de production d'actionneurs ou alors qu'ils sont installés dans un bâtiment

## Revendications

1. Appareil (1) de configuration d'un actionneur (2) de dispositif (20) de fermeture, d'occultation, de protection solaire ou d'écran, l'actionneur entraînant un élément mobile (3), l'appareil (1) étant destiné à être connecté et à interagir avec l'actionneur et l'élément mobile exclusivement pendant des phases de configuration de l'actionneur et comprenant des moyens (19, 6) pour enregistrer des données dans l'actionneur, **caractérisé en ce qu'**il comprend des moyens (19, 6) pour commander l'actionneur et des moyens de détection (8, 9, 24) pour détecter au moins une position particulière de l'élément mobile.

2. Appareil (1) de configuration selon la revendication 1, **caractérisé en ce qu'**il comprend des moyens (4, 5, 6) pour alimenter l'actionneur.

3. Appareil (1) de configuration selon la revendication 1 ou 2, **caractérisé en ce que** les moyens de détection (8, 9, 24) comprennent deux capteurs pour détecter la position de fin de course haute et la position de fin de course basse de l'élément mobile.

4. Appareil (1) de configuration selon l'une des revendications précédentes, **caractérisé en ce que** les moyens de détection (8, 9, 24) comprennent un capteur pour détecter une position intermédiaire de l'élément mobile.

5. Appareil (1) de configuration selon l'une des revendications précédentes, **caractérisé en ce que** les moyens de détection (8, 9, 24) comprennent un capteur (24) pour détecter le sens de mouvement de l'élément mobile.

6. Appareil (1) de configuration selon l'une des revendications précédentes, **caractérisé en ce qu'**il comprend une unité de configuration (19) et des moyens de détection (8, 9, 24) communiquant avec l'unité de configuration.

7. Appareil (1) de configuration selon l'une des revendications précédentes, **caractérisé en ce que** les moyens de détection (8, 9, 24) agissent sur la valeur du courant délivré sur une fiche bipolaire (10) de l'unité de configuration (19).

8. Procédé de fonctionnement d'un appareil de configuration selon l'une des revendications précédentes, **caractérisé en ce qu'**une action d'un opérateur déclenche une procédure de réglage comprenant l'envoi d'au moins un ordre de mouvement, la détection automatique et l'enregistrement automatique dans une mémoire de l'actionneur (2) d'au moins une valeur correspondant à une position particulière de l'élément mobile (3) et/ou l'enregistrement automatique d'une valeur déterminant la correspondance entre les ordres de commande et les mouvements de l'élément mobile (3) exécutés.

9. Procédé de fonctionnement selon la revendication 8, **caractérisé en ce qu'**après la mise sous tension de l'appareil, une seule action de l'opérateur déclenche la procédure de réglage.

10. Procédé de fonctionnement selon la revendication 8 ou 9, **caractérisé en ce qu'**une étape de test du fonctionnement des moyens de détection (8, 9) est effectuée automatiquement avant le lancement de la procédure de réglage et **en ce que** cette procédure de réglage n'est pas lancée si l'étape de test conduit à la conclusion qu'il existe un dysfonctionnement des moyens de détection (8, 9).

11. Procédé de fabrication d'un appareil selon l'une des revendications 1 à 7, **caractérisé en ce qu'**il comprend les étapes suivantes :
- fournir une unité électronique normalement destinée à commander un actionneur d'un dispositif de fermeture, d'occultation, de protection solaire ou d'écran,
- programmer cette unité électronique de manière à ce qu'elle permette la configuration d'un actionneur et
- raccorder cette unité électronique à des moyens de détection pour détecter au moins une position particulière d'un élément mobile.

12. Procédé de fabrication selon la revendication 11, **caractérisé en ce que** l'unité électronique comprend une fiche lui permettant d'être normalement reliée à un capteur météorologique.
